# FASCICULE DE BREVET EUROPEEN

(11) **EP 2 399 821 B1**
(45) Date de publication et mention de la délivrance du brevet: **31.08.2016**
(21) Numéro de dépôt: 11171085.1
(22) Date de dépôt: 22.06.2011
(51) Int. Cl.: B64C 1/06, B64C 1/40

(54) **Matelas isolant pour aéronef et ensemble intégrant un tel matelas**
Dämmmatte für Luftfahrzeug, und eine solche Matte umfassende Einheit
Insulated mattress for an aircraft and assembly including such a mattress

(30) Priorité: 22.06.2010 FR 1002612
(43) Date de publication de la demande: 28.12.2011
(73) Titulaire: Airbus Operations, 31060 Toulouse (FR)
(72) Inventeur: Holvoet, Julie, 31300 Toulouse (FR); Charon, Pierre, 31100 Toulouse (FR); Philippe, Olivier, 31200 Toulouse (FR)
(74) Mandataire: Santarelli

(56) Documents cités:
- WO-A1-2005/068290
- FR-A1- 2 936 219
- US-A1- 2005 082 431

## Description

La présente invention concerne un matelas isolant pour aéronef ainsi qu'un ensemble intégrant un tel matelas.

La structure du fuselage d'un aéronef est usuellement constituée de cadres s'étendant dans des plans transversaux, de lisses s'étendant sensiblement selon une direction longitudinale de l'aéronef à l'extérieur des cadres, et d'une peau qui recouvre lesdites lisses et est fixée à celles-ci. La peau est également fixée aux cadres, par l'intermédiaire de pièces de liaison connues sous le nom de stabilisateur ou clip.

Au niveau de la cabine notamment, les faces intérieures du fuselage sont recouvertes successivement par des matelas isolants, réalisant une isolation thermique et acoustique de la cabine, et par des panneaux de revêtement dont la face intérieure reste visible depuis la cabine et forme donc une face de finition. Entre deux cadres successifs du fuselage, la peau dudit fuselage est recouverte de matelas isolants appelés matelas de peau. Chaque cadre du fuselage est par ailleurs recouvert par un matelas appelé matelas de cadre. Une zone de recouvrement peut être prévue entre des matelas de cadre et de peau consécutifs.

Entre les matelas isolants et les panneaux de revêtement sont agencés des systèmes : équipements, câblages électriques, réseaux hydrauliques et pneumatiques, ...

Ces systèmes sont usuellement fixés à la structure du fuselage par des dispositifs de fixation ponctuels traversant les matelas isolants recouvrant ladite structure. Ainsi par exemple, les câblages électriques sont fixés aux cadres du fuselage à l'aide de dispositifs de fixation ponctuels comportant une tige qui traverse le cadre et le (ou les) matelas qui le recouvre, des rondelles de blocage de la tige de part et d'autre du cadre, et une patte dans laquelle vient s'engager un collier à serrage rapide recevant un ou plusieurs câblages. Les tuyaux prévus pour la circulation d'air conditionné sont quant à eux usuellement fixés aux lisses, à l'aide de dispositifs de fixation ponctuels comprenant un collier de serrage porté par un support fixé à une lisse par des vis ; ces vis traversent le matelas de peau recouvrant la lisse (voir, par exemple, le document US2005/0082431).

Pour la fixation des systèmes, il est donc nécessaire de réaliser des trous dans la structure du fuselage ainsi que dans les matelas isolants.

Les trous réalisés dans la structure fragilisent celle-ci et obligent donc à prévoir des zones épaissies ou autres renforts structuraux à leur proximité. Ces trous compliquent donc la conception du fuselage.

Les trous réalisés dans les matelas isolants dégradent les performances d'isolation de ces derniers, créant autant de ponts thermiques et acoustiques. Ils réduisent également leur étanchéité à l'eau (or les matelas isolants ont également pour fonction de drainer, jusqu'au fond de barque du fuselage, l'eau de condensation apparaissant sur la peau de ce dernier). En outre, la réalisation de ces trous complique considérablement la fabrication des matelas et grève leurs coûts de revient. En effet, au niveau de chaque trou réalisé dans un matelas comprenant une couche en laine de verre, ladite couche doit être remplacée par un disque en mousse, qui facilite la réalisation du trou et renforce le matelas autour dudit trou afin d'éviter que le matelas ne se déchire.

De surcroît, en cas de modification tardive (alors que l'aéronef est en phase d'assemblage par exemple) de la structure du fuselage ou d'un système, il est nécessaire de réaliser un ou plusieurs trous supplémentaires dans le matelas concerné et/ou dans l'élément de structure concerné.

La réalisation d'un trou supplémentaire dans un matelas est un procédé particulièrement long et fastidieux. À cette fin, il convient en effet de coller une bande adhésive sur chaque face du matelas à l'emplacement du trou, découper un disque dans le matelas à l'emplacement du trou à l'aide d'un premier outil coupant spécifique, retirer le disque de matelas ainsi découpé et le remplacer par un disque de mousse, coller à nouveau une bande adhésive sur chaque face du matelas de façon à recouvrir et maintenir le disque de mousse, percer le matelas au centre du disque de mousse à l'aide d'un deuxième outil coupant spécifique de façon à former le trou. Lorsqu'un trou supplémentaire est réalisé dans un matelas, il est en outre nécessaire de reboucher le trou désormais inutilisé du matelas.

La réalisation tardive de trous dans un élément de structure pose également problème. Ces trous affaiblissent la structure et, parce qu'ils ne sont pas prévus lors de la conception du fuselage, obligent très souvent à ajouter des renforts structuraux. De surcroît, lorsque la structure est en un matériau composite, la réalisation d'un trou requiert l'utilisation d'un outil spécifique, génère des copeaux nocifs -et donc dangereux pour l'opérateur chargé de réaliser le trou-, et peut provoquer des délaminations du matériau composite autour du trou. Ces problèmes sont plus difficiles à maîtriser lorsque la réalisation du trou n'est pas prévue d'origine et ne s'effectue pas au poste de fabrication de la structure.

Pour toutes les raisons précédemment évoquées, il est souhaitable de limiter le nombre de trous réalisés dans la structure et dans les matelas pour la fixation des systèmes.

L'invention a pour objectif de réduire le nombre de trous à réaliser, aux fins de fixation des systèmes, dans la structure du fuselage d'un aéronef et dans les matelas isolants qui recouvrent cette structure. L'invention permettra également avantageusement d'éviter à avoir à réaliser des trous supplémentaires dans la structure du fuselage ou dans les matelas isolants en cas de modification tardive de cette structure ou de certains systèmes.

À cet effet, la présente invention propose un matelas isolant pour aéronef selon la revendication 1, se présentant sous la forme d'une bande de matériau isolant de forme allongée présentant deux bords longitudinaux sensiblement parallèles.

Selon la présente invention, un tel matelas comporte au moins une barre s'étendant sur une face du matelas isolant, d'un bord longitudinal à l'autre de celui-ci, ainsi que des moyens de maintien de ladite barre, et la barre porte au moins un support de système destiné à recevoir un système.

De la sorte, les systèmes sont portés par une barre montée sur le matelas isolant et non plus sur des supports eux-mêmes fixés directement sur la structure de l'aéronef. Si la position des systèmes doit être adaptée lors du montage, il n'est alors pas nécessaire de modifier en quoi que ce soit la structure de l'aéronef, mais uniquement d'agir au niveau des matelas isolants portant les barres sur lesquelles sont montés des supports de systèmes.

Dans une forme de réalisation, il est prévu que les moyens de maintien de la barre comportent des passants cousus sur la face correspondante du matelas isolant. Ces moyens de fixation sont faciles à réaliser, légers et permettent d'assurer un maintien suffisant de la barre vis-à-vis du matelas. Toutefois, d'autres moyens de maintien peuvent être envisagés. On pourrait ainsi avoir des passants non pas cousus mais fixés, par exemple à l'aide de boutons ou de boutons à pression. On pourrait également avoir un système d'attache avec une bande auto-agrippante comportant par exemple des rubans tels ceux comportant des crochets et des bouclettes et connus sous la marque déposée Velcro.

Pour permettre d'avoir un meilleur positionnement de la barre sur le matelas et un maintien latéral renforcé, il peut être prévu que chaque barre soit logée dans une rainure.

Pour la fixation du matelas dans l'aéronef, une forme de réalisation avantageuse prévoit que ce matelas comporte en outre un premier ruban d'une bande auto-agrippante formée de deux rubans de tissu, l'un portant des crochets et l'autre des bouclettes, et que ledit premier ruban est fixé sur le matelas sur la face opposée à la face portant la barre.

La présente invention concerne également un ensemble comportant un matelas isolant tel que décrit ci-dessus, ledit ensemble étant caractérisé en ce qu'il comporte en outre un support de fixation pour le maintien de chacune des deux extrémités de chaque barre.

Un tel ensemble peut aussi comporter en outre deux matelas de cadre disposés à chaque fois le long d'un bord longitudinal du matelas isolant, matelas de cadre comportant une encoche au niveau de chaque support de fixation.

La présente invention propose aussi un système d'isolation constitué de deux ensembles tels que définis au paragraphe précédent et caractérisé en ce que les deux matelas isolants sont disposés l'un dans le prolongement de l'autre, et en ce qu'une découpe de forme oblongue est réalisée dans les deux matelas isolants, à la jonction de ceux-ci. Dans un tel système d'isolation selon l'invention, on prévoit avantageusement que pour chaque matelas isolant, un rebord en matière synthétique rigide reprenant la forme de la découpe est fixé sur le matelas correspondant, et que les deux rebords présentent des moyens d'assemblage réversibles permettant de relier les deux rebords.

La présente invention propose en outre un tronçon de fuselage d'aéronef, comportant des cadres, une peau extérieure fixée sur les cadres à l'aide de pièces de fixation appelées stabilisateurs, au moins un matelas isolant, caractérisé en ce qu'il comporte au moins un ensemble décrit plus haut, et en ce que les supports de fixation sont chacun fixés sur un stabilisateur.

Enfin, la présente invention vise aussi un aéronef qui comporte au moins un matelas isolant tel que décrit plus haut.

Des détails et avantages de la présente invention ressortiront mieux de la description qui suit, faite en référence aux dessins schématiques annexés sur lesquels :
- la figure 1 montre un matelas isolant selon la présente invention monté dans un aéronef,
- la figure 2 est une vue en perspective, à échelle agrandie par rapport à la figure 1, d'un matelas isolant de la figure 1,
- la figure 3 est une vue de détail à échelle agrandie de la figure 2,
- la figure 4 montre un exemple d'une liaison d'un matelas isolant selon l'invention à une structure d'aéronef,
- la figure 5 est une vue de détail montrant un support de liaison à la structure d'un aéronef,
- la figure 6 montre des moyens de support pour des câbles électriques,
- la figure 7 montre un support pour un tuyau d'air et un tronçon d'air correspondant,
- la figure 8 montre en position montée les dispositifs des figures 6 et 7,
- la figure 9 est une vue de détail autour d'un hublot d'aéronef montrant comment l'invention s'applique au niveau d'un tel hublot,
- la figure 10 est une vue correspondant à la figure 11, un matelas isolant ayant été retiré, et
- la figure 11 montre un rebord de matelas isolant que l'on peut apercevoir sur la figure 9.

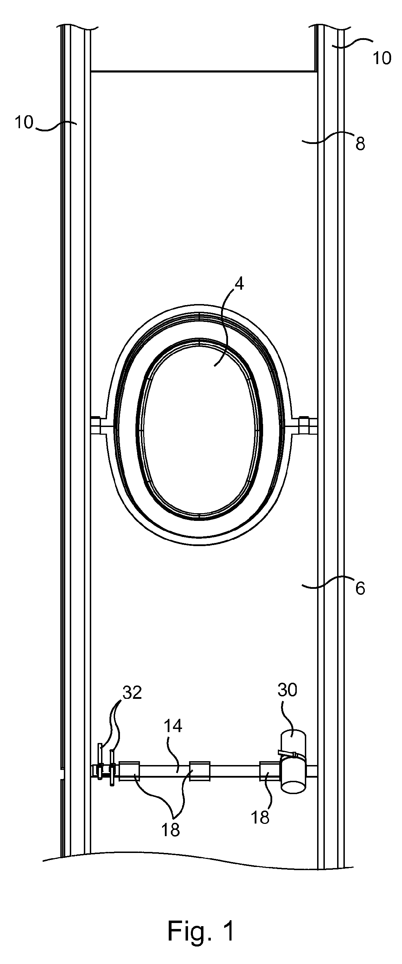

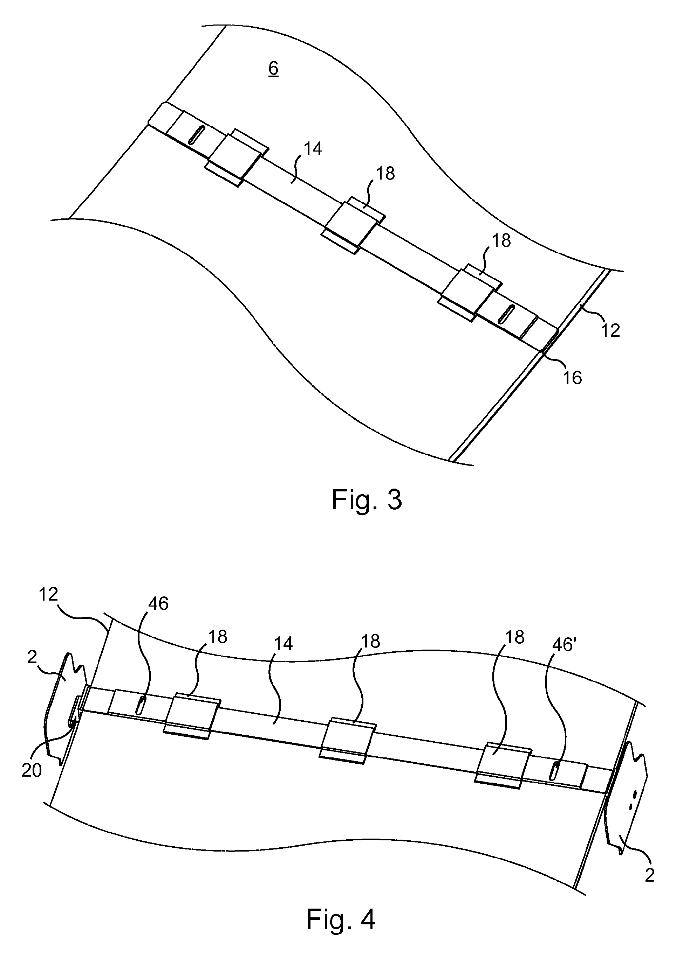

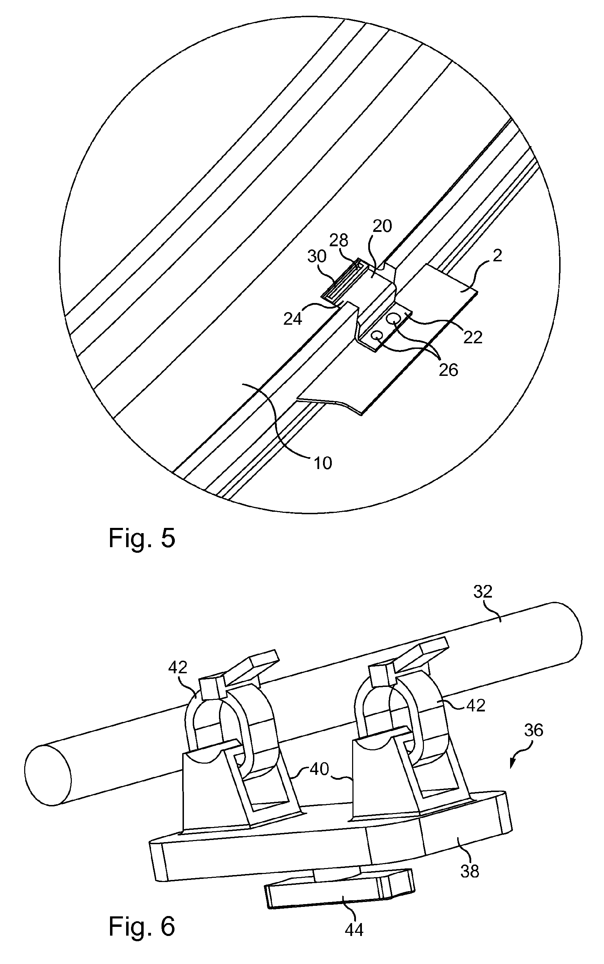

La figure 1 représente une portion de fuselage d'aéronef isolée à l'aide de matelas isolants. De manière classique, la structure d'un aéronef comporte des cadres que relient des lisses. Une peau extérieure est fixée sur les cadres et les lisses pour former le fuselage de l'aéronef. Les cadres sont des pièces profilées cintrées de manière à former un anneau, le plus souvent un anneau circulaire. Les cadres sont disposés dans un plan transversal par rapport à l'axe longitudinal de l'aéronef et les lisses relient les cadres en s'étendant longitudinalement par rapport à l'aéronef. La peau extérieure formant le fuselage est fixée sur les cadres et les lisses à l'aide de pièces de liaison appelées stabilisateurs 2. On peut apercevoir une partie d'un tel stabilisateur par exemple sur les figures 4 et 5.

La description qui est faite ci-après est faite en référence à une partie de fuselage intégrant un hublot 4. Bien entendu, la présente invention s'applique également à l'isolation de portions de fuselage ne présentant pas de hublot et l'homme du métier pourra sans difficulté appliquer la présente invention à un tel tronçon de fuselage.

De manière classique, pour réaliser l'isolation thermique et acoustique de l'aéronef, on utilise des matelas isolants. Deux grandes familles de matelas isolants sont utilisées : les matelas de peau 6, 8 et les matelas de cadre 10. Les matelas de peau sont des matelas isolants, en mousse ou similaire, se présentant sous la forme de bandes que l'on vient poser entre deux cadres successifs d'un aéronef. Les matelas de cadre 10, quant à eux, sont utilisés pour recouvrir les cadres et faire le lien entre deux matelas de peau de deux tronçons de fuselage voisins.

Sur la figure 1, on a un premier matelas de peau 6 ou matelas de peau inférieur qui s'étend entre deux cadres jusqu'à mi-hauteur du hublot 4. Un second matelas de peau 8, ou matelas de peau supérieur, s'étend quant à lui depuis la mi-hauteur du hublot 4 vers le haut. Comme expliqué plus en détail plus loin, une découpe est réalisée au niveau de la jonction entre le premier matelas de peau 6 et le second matelas de peau 8 pour s'adapter à la forme du contour du hublot 4.

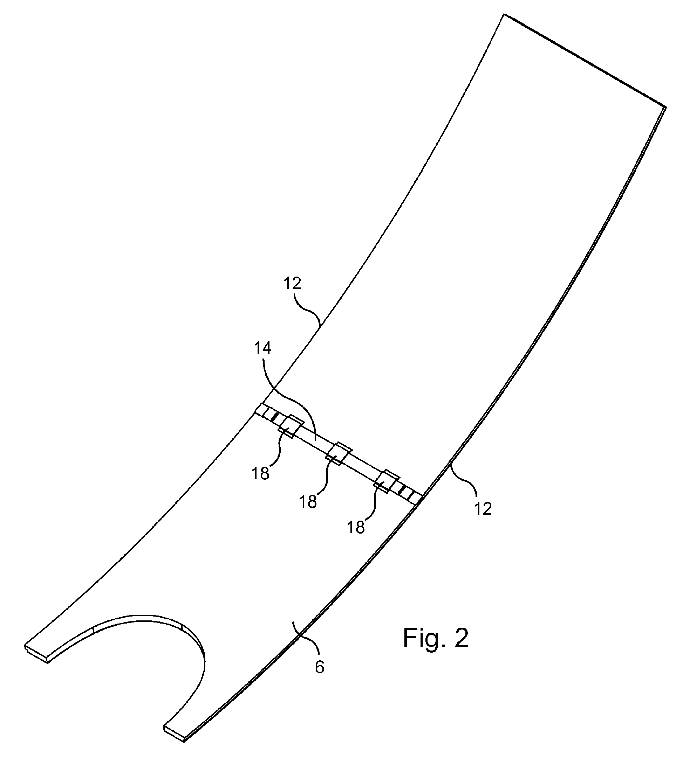

La figure 2 montre en perspective le premier matelas de peau 6 de la figure 1. Il s'agit d'un matelas isolant réalisé dans une mousse du type de celle utilisée habituellement dans l'art antérieur pour réaliser des matelas de peau d'aéronef. Comme on peut le remarquer, le premier matelas de peau 6 présente une forme globale rectangulaire allongée. Ce matelas de peau 6 présente ainsi deux bords longitudinaux 12 qui correspondent aux longs côtés de la forme rectangulaire du matelas de peau 6. La découpe évoquée plus haut pour s'adapter à la forme du hublot 4 est réalisée dans un bord transversal correspondant à un petit côté de la forme rectangulaire allongée du matelas de peau 6.

Selon la présente invention, et comme on peut le voir sur la figure 2, le premier matelas de peau 6 porte sur l'une de ses faces une barre 14. Cette barre 14 s'étend d'un bord longitudinal 12 à l'autre, sensiblement perpendiculairement à ses bords longitudinaux. La barre 14 est par exemple réalisée dans une matière synthétique rigide (par opposition à une barre qui serait en caoutchouc).

Le maintien et le positionnement de cette barre 14 est assurée d'une part par une rainure 16 et d'autre part par des passants 18. La rainure 16 est réalisée à la surface du matelas de peau 6. La profondeur de la rainure 16 correspond par exemple à tout ou partie de l'épaisseur de la barre 14.

Les passants 18 sont par exemple réalisés dans des bandes de tissu. Une extrémité de passant est par exemple cousue d'un côté de la rainure 16 tandis que son autre extrémité est cousue de l'autre côté de la rainure 16. Dans la forme de réalisation représentée aux dessins, trois passants 18 sont prévus. Bien entendu, un autre nombre de passant peut être envisagé. On pourrait par exemple avoir un passant sur toute la largeur du matelas qui formerait alors un fourreau pour la barre 14. La fixation des passants peut se faire par tous moyens sur le matelas. On peut par exemple utiliser des boutons, ou des boutons pressions. Une bande auto-agrippante peut aussi être envisagée. Une telle bande auto-agrippante est formée de deux rubans de tissu. Un premier ruban porte sur l'une de ses surfaces des crochets tandis que l'autre ruban porte sur l'une des surfaces des bouclettes qui s'agrippent aux crochets lorsque lesdites surfaces viennent au contact l'une de l'autre. Un ruban (à crochets ou à bouclettes) peut alors être fixé sur le matelas, par exemple par collage ou par couture, de part et d'autre de la position de la barre 14 et des tronçons de ruban (à bouclettes ou à crochets) peuvent relier les rubans fixés sur le matelas en formant ainsi des passants amovibles. On peut aussi envisager de fixer un ruban (ou des tronçons de ruban) d'un type (à crochets ou à bouclettes) sur une face de la barre 14 et d'un autre type (à bouclettes ou à crochets), sur le matelas isolant, à l'emplacement prévu pour recevoir la barre 14.

La fixation du matelas de peau 6 est par exemple réalisée à l'aide de bandes auto-agrippantes (plus connues sous le nom de bandes Velcro -marque déposée-). Un ruban de tissu de la bande auto-agrippante est collé sur la peau extérieure formant le fuselage de l'aéronef tandis que l'autre ruban formant la bande auto-agrippante est fixé, par exemple par collage, sur le premier matelas de peau 6. Les rubans de la bande auto-agrippante ne sont pas représentés sur les dessins. Le ruban de la bande auto-agrippante collé sur le matelas de peau 6 est collé sur la face de ce matelas opposé à la face du matelas de peau 6 portant la barre 14.

La barre 14 est reliée à la structure de l'aéronef par l'intermédiaire de deux supports de fixation 20. Chaque support de fixation se présente sous la forme d'une pièce en Z. Chaque support de fixation 20 présente un pied de fixation 22, une tête 24 et un corps de liaison reliant le pied de fixation 2 à la tête 24.

Le pied de fixation 22 se présente sous la forme d'une plaque présentant deux alésages 26 de diamètres différents. De cette manière, un support de fixation 20 peut être fixé sur un stabilisateur 2 présentant des alésages correspondants d'une seule manière. Lors d'un éventuel démontage, on ne risque alors pas d'intervertir deux supports de fixation montés sur un même stabilisateur.

La tête 24 du support de fixation 20 se présente également sous la forme d'une plaque. Cette dernière est parallèle au pied de fixation 22 et présente une rainure formant un logement 28 dont les dimensions sont adaptées à celle d'une extrémité de la barre 14. Ainsi, comme illustré sur la figure 4, chaque extrémité de la barre 14 vient prendre place dans un logement 28 d'un support de fixation 20. Pour faciliter l'introduction de l'extrémité de la barre 14 dans le logement 28, on peut prévoir que la tête 24 présente un bord supérieur chanfreiné 30 (figure 5).

La barre 14, outre sa fonction de maintien du matelas de peau sur lequel elle se trouve, a également pour fonction de supporter des systèmes, tels par exemple des tuyaux d'air 30 ou des câbles électriques 32.

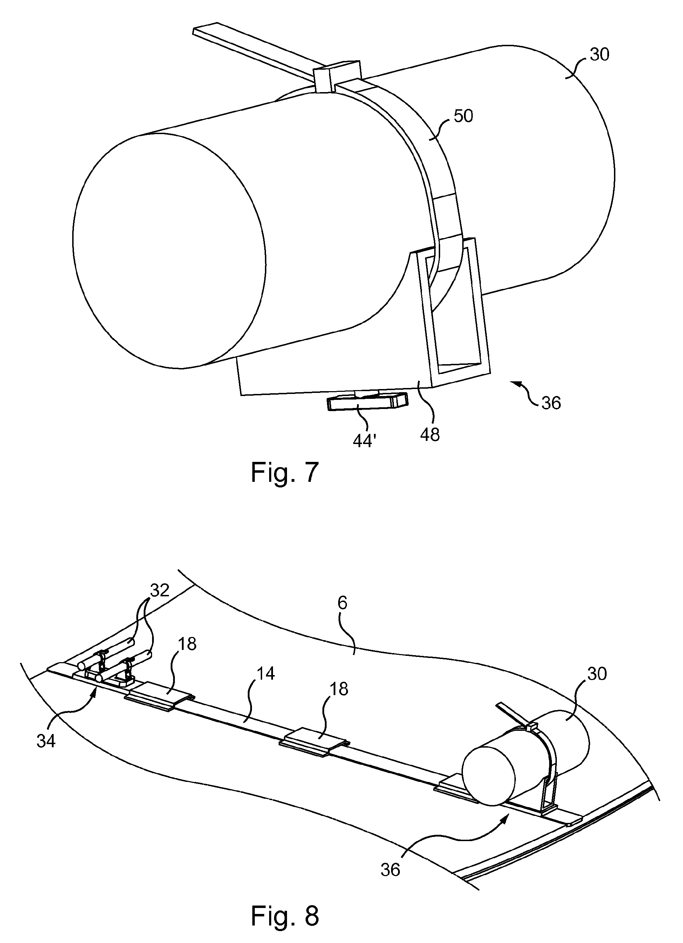

La figure 6 montre un support de câbles 34 destiné à recevoir deux câbles électriques 32 tandis que la figure 7 montre un support de tuyau 36 destiné à recevoir un tuyau d'air 30.

Le support de câbles 34 présente une base 38 sur laquelle sont disposées deux mini-socles 40 destinés chacun à recevoir un câble électrique 32. Chaque mini-socle 40 présente une surface supérieure adaptée à la surface périphérique d'un câble électrique et présente un trou traversant permettant le passage d'un collier 42 élastique de manière à permettre le serrage d'un câble électrique 32 posé sur la surface supérieure du mini-socle 40. Du côté opposé aux mini-socles 40, la base 38 porte un tenon 44 de forme allongée. La barre 14 présente quant à elle un trou oblong 46 adapté pour recevoir le tenon 44 du support de câbles 34. La fixation du support de câbles 34 sur la barre 14 se fait alors par quart de tour. On peut prévoir dans la barre 14 un système de butée/verrouillage permettant le blocage du support de câbles 34 dans une position donnée sur la barre 14.

Le support de tuyau 36 (figure 7) comporte un socle 48, dont la face supérieure est adaptée à la surface périphérique extérieure d'un tuyau d'air 30 et présente également un trou traversant permettant le passage d'un collier 50 permettant de maintenir un tuyau d'air 30 posé sur la face supérieure du socle 48. Le support de tuyau 36 présente également un tenon 44' destiné à coopérer avec un trou oblong 46' de la barre 14 de manière à permettre un montage quart de tour du support de tuyau 36 sur la barre 14.

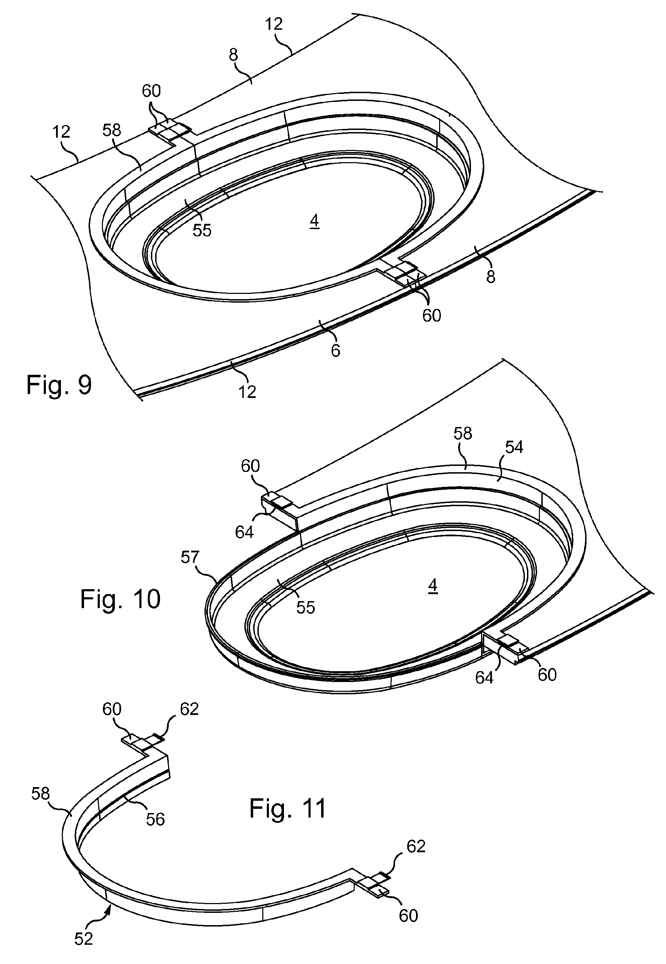

Les figures 9 à 11 illustrent comment il est également possible de maintenir un matelas de peau autour d'un hublot 4 lorsqu'on utilise un matelas isolant selon la présente invention. De manière habituelle, un cadre de hublot 55 vient entourer le hublot 4. Il est proposé ici de réaliser un cerclage autour du cadre de hublot 55 pour maintenir les matelas de peau 6 et 8 autour du hublot. Ce cerclage est réalisé en deux parties, une partie mâle 52 et une partie femelle 54. Chacune de ces deux parties vient épouser la forme du cadre de hublot 55 sur la moitié de sa périphérie. Un épaulement 56 permet de réaliser l'accrochage de chacune de ces deux parties sur le cadre de hublot 55 qui vient coopérer avec un bourrelet extérieur 57 se trouvant à la périphérie du cadre de hublot 55. Chacune des deux parties présente un rebord 58 qui s'étend en s'éloignant du hublot 4 et de manière à venir recouvrir le matelas de peau 6, 8 correspondant.

Au niveau de la jonction entre la partie mâle 52 et la partie femelle 54, le rebord 58 s'étend à chaque fois radialement en s'éloignant du hublot 4 et formant ainsi des pattes de liaison 60. Les pattes de liaison 60 de la partie mâle 52 portent chacune une languette 62 dentée tandis que les pattes de liaison 60 de la partie femelle 54 portent quant à elles un logement 64 correspondant permettant d'accueillir à chaque fois une languette 62, l'extrémité dentée de la languette pouvant traverser de part en part le logement 64 et venir s'agripper en formant ainsi un encliquetage. De la sorte, un matelas de peau est maintenu à la structure de l'aéronef par des bandes auto-agrippantes, par l'intermédiaire de support de fixation 20 maintenant une barre 14 et par le cerclage réalisé autour d'un cadre de hublot 55.

Le montage des matelas de peau, mais aussi des matelas de cadre ainsi que des systèmes, est aisé grâce à la présente invention. Grâce à la présence de bandes auto-agrippantes, le matelas peut être positionné et "pré-maintenu" sur le fuselage de l'aéronef. Grâce à la souplesse des barres 14 en matière synthétique, les extrémités de celles-ci viennent s'encliqueter dans leur logement 28 prévu à cet effet dans la tête 24 des supports de fixation 20. Les systèmes viennent se fixer sur les barres 14. Ainsi, il n'est pas nécessaire de prévoir de multiples trous dans la structure et/ou les matelas isolants.

Dans la description qui précède, comme il apparaîtra directement à l'homme du métier, seuls des trous sont prévus dans certains stabilisateurs reliant la peau extérieure du fuselage aux cadres de la structure. Du côté des matelas, il semble inévitable de réaliser une découpe autour des hublots pour ce qui concerne les matelas de peau. Aucune autre découpe spécifique n'a à être réalisée dans ces matelas de peau. Les rainures réalisées dans ceux-ci pour accueillir les barres sont optionnelles. En outre, ces rainures sont réalisées à l'avance et ne sont pas réalisées sur place lors du montage du matelas de peau dans l'aéronef.

Comme on peut l'apercevoir sur la figure 5, il convient de prévoir des découpes au niveau des supports de fixation dans les matelas de cadre 10. Le nombre de découpes est ici très limité. Lorsque l'aéronef correspondant est en maintenance, le démontage et le remontage des panneaux isolants est très facile avec un système selon la présente invention. Aucun outil spécifique, tant lors du premier montage que pour la maintenance n'est nécessaire.

Bien entendu, la présente invention ne se limite pas à la forme de réalisation décrite ci-dessus à titre d'exemple non limitatif. Elle concerne également toutes les variantes de réalisation à la portée de l'homme du métier dans le cadre des revendications ci-après.

## Revendications

1. Matelas isolant pour aéronef se présentant sous la forme d'une bande de matériau isolant de forme allongée présentant deux bords longitudinaux (12) sensiblement parallèles, comportant au moins une barre (14) s'étendant sur une face de la bande de matériau isolant(6), d'un bord longitudinal (12) à l'autre de celle-ci, à distance des autres bords, ainsi que des moyens de maintien (18) pour le maintien de ladite barre (14) vis-à-vis de ladite bande de matelas isolant, la barre (14) portant au moins un support de système (34, 36) destiné à recevoir un système (30, 32), **caractérisé en ce que** les moyens de maintien comportent des passants (18) cousus sur la face correspondante de la bande de matériau isolant.

2. Matelas isolant selon la revendication 1, **caractérisé en ce que** chaque barre (14) est logée dans une rainure (16).

3. Matelas isolant selon l'une des revendications précédentes, **caractérisé en ce qu'**il comporte en outre un premier ruban d'une bande auto-agrippante formée de deux rubans de tissu, l'un portant des crochets et l'autre des bouclettes, et **en ce que** ledit premier ruban est fixé sur la bande de matériau isolant sur la face opposée à la face portant la barre (14).

4. Ensemble comportant un matelas isolant selon l'une des revendications précédentes, **caractérisé en ce qu'**il comporte en outre un support de fixation (20) pour le maintien de chacune des deux extrémités de chaque barre (14).

5. Ensemble selon la revendication 4, **caractérisé en ce qu'**il comporte en outre deux matelas de cadre (10) disposés à chaque fois le long d'un bord longitudinal (12) du matelas isolant (6, 8), **en ce que** chaque matelas de cadre (10) comporte une encoche au niveau de chaque support de fixation (20).

6. Système d'isolation constitué de deux ensembles selon l'une des revendications 4 ou 5, **caractérisé en ce que** les deux matelas isolants (6, 8) sont disposés l'un dans le prolongement de l'autre, et **en ce qu'**une découpe de forme oblongue est réalisée dans les deux matelas isolants, à la jonction de ceux-ci.

7. Système d'isolation selon la revendication 6, **caractérisé en ce que** pour chaque matelas isolant, un rebord (52, 54) en matière synthétique rigide reprenant la forme de la découpe est fixé sur le matelas (6, 8) correspondant, et **en ce que** les deux rebords (52, 54) présentent des moyens d'assemblage réversibles (62, 64) permettant de relier les deux rebords.

8. Tronçon de fuselage d'aéronef, comportant des cadres, une peau extérieure fixée sur les cadres à l'aide de pièces de fixation appelées stabilisateurs, au moins un matelas isolant,
**caractérisé en ce qu'**il comporte au moins un ensemble selon la revendication 4, et **en ce que** les supports de fixation (20) sont chacun fixés sur un stabilisateur (2).

9. Aéronef, **caractérisé en ce qu'**il comporte au moins un matelas isolant selon l'une des revendications 1 à 3.

10. Procédé d'installation d'un ensemble selon l'une des revendications 4 ou 5 dans un tronçon de fuselage d'aéronef, **caractérisé en ce qu'**il comporte les étapes successives suivantes :
- on fixe des supports de fixation (20) sur des stabilisateurs du tronçon de fuselage,
- on positionne un matelas de peau contre le fuselage, et on encliquette chaque extrémité de chaque barre (14) portée par le matelas dans un logement (28) prévu dans un support de fixation (20).

## Patentansprüche

1. Dämmmatte für ein Luftfahrzeug, die in Form eines Dämmmaterialbands länglicher Form vorliegt, das zwei im Wesentlichen parallele Längsränder (12) aufweist, die mindestens eine Stange (14), die sich auf einer Seite des Dämmmaterialbands (6) von einem Längsrand (12) von diesem zum anderen in Abstand zu den anderen Rändern erstreckt, sowie Halteeinrichtungen (18) zum Halt der Stange (14) gegenüber dem Dämmmattenband aufweist, wobei die Stange (14) mindestens einen Systemträger (34, 36) trägt, der dazu bestimmt ist, ein System (30, 32) aufzunehmen, **dadurch gekennzeichnet, dass** die Halteeinrichtungen Durchlässe (18) aufweisen, die auf die entsprechende Seite des Dämmmaterialbands genäht sind.

2. Dämmmatte nach Anspruch 1, **dadurch gekennzeichnet, dass** jede Stange (14) sich in einer Rille (16) befindet.

3. Dämmmatte nach einem der vorhergehenden Ansprüche, **dadurch gekennzeichnet, dass** sie außerdem einen ersten Streifen eines selbsthaftenden Bands aufweist, das von zwei Stoffstreifen geformt wird, von denen einer Haken und der andere Schlaufen trägt, und dass der erste Streifen auf dem Dämmmaterialband auf der Seite befestigt ist, die der die Stange (14) tragenden Seite gegenüberliegt.

4. Einheit, die eine Dämmmatte nach einem der vorhergehenden Ansprüche aufweist, **dadurch gekennzeichnet, dass** sie außerdem einen Befestigungsträger (20) für den Halt jedes der zwei Enden jeder Stange (14) aufweist.

5. Einheit nach Anspruch 4, **dadurch gekennzeichnet, dass** sie außerdem zwei Rahmenmatten (10) aufweist, die jedes Mal entlang eines Längsrands (12) der Dämmmatte (6, 8) angeordnet sind, dass jede Rahmenmatte (10) eine Kerbe im Bereich jedes Befestigungsträgers (20) aufweist.

6. Dämmsystem, das aus zwei Einheiten nach einem der Ansprüche 4 oder 5 besteht, **dadurch gekennzeichnet, dass** die zwei Dämmmatten (6, 8) in der gegenseitigen Verlängerung angeordnet sind, und dass ein Ausschnitt länglicher Form in den zwei Dämmmatten an deren Verbindung hergestellt ist.

7. Dämmsystem nach Anspruch 6, **dadurch gekennzeichnet, dass** für jede Dämmmatte eine Randleiste (52, 54) aus steifem Kunststoff, die die Form des Ausschnitts aufgreift, an der entsprechenden Matte (6, 8) befestigt ist, und dass die zwei Randleisten (52, 54) umkehrbare Montageeinrichtungen (62, 64) aufweisen, die es ermöglichen, die zwei Randleisten (52, 54) zu verbinden.

8. Rumpfabschnitt eines Luftfahrzeugs, der Rahmen, eine an den Rahmen mit Hilfe von Stabilisatoren genannten Befestigungsbauteilen befestigte Außenhaut, mindestens eine Dämmmatte aufweist, **dadurch gekennzeichnet, dass** er mindestens eine Einheit nach Anspruch 4 aufweist, und dass die Befestigungsträger (20) je an einem Stabilisator (2) befestigt sind.

9. Luftfahrzeug, **dadurch gekennzeichnet, dass** es mindestens eine Dämmmatte nach einem der Ansprüche 1 bis 3 aufweist.

10. Verfahren zum Einbau einer Einheit nach einem der Ansprüche 4 oder 5 in einem Rumpfabschnitt eines Luftfahrzeugs, **dadurch gekennzeichnet, dass** es die folgenden aufeinanderfolgenden Schritte aufweist:
- Befestigungsträger (20) werden an Stabilisatoren des Rumpfabschnitts befestigt,
- eine Hautmatte wird gegen den Rumpf positioniert, und jedes Ende jeder von der Matte getragenen Stange (14) wird in eine Aufnahme (28) eingerastet, die in einem Befestigungsträger (20) vorgesehen ist.

## Claims

1. Insulation blanket for an aircraft coming in the form of a strip of insulation material of elongated shape having two more or less parallel longitudinal edges (12),
comprising at least one bar (14) extending over one face of the strip of material insulation (6), from one longitudinal edge (12) to the other thereof, at a distance from the other edges, as well as holding means (18) for holding the said bar (14) with respect to the said strip of insulation blanket, the bar (14) bearing at least one system support (34, 36) intended to receive a system (30, 32), **characterised in that** the holding means comprise loops (18) stitched onto the corresponding face of the strip of insulation material.

2. Insulation blanket according to claim 1, **characterised in that** each bar (14) is accommodated in a groove (16).

3. Insulation blanket according to one of the preceding claims, **characterised in that** it further comprises a first tape of a self-gripping strip made up of two fabric tapes, one bearing hooks and the other loops, and **in that** the said first tape is fastened onto the strip of insulation material on the face opposite the face bearing the bar (14).

4. Assembly comprising an insulation blanket according to one of the preceding claims, **characterised in that** it further comprises a fastening support (20) for holding each of the two ends of each bar (14).

5. Assembly according to claim 4, **characterised in that** it further comprises two frame blankets (10) disposed along a longitudinal edge (12) of the insulation blanket (6, 8) in each instance, **in that** each frame blanket (10) comprises a notch at each fastening support (20).

6. Insulation system made up of two assemblies according to one of claims 4 and 5, **characterised in that** the two insulation blankets (6, 8) are disposed one in the extension of the other, and **in that** an oblong-shaped cut-out is made in the two insulation blankets, at the joining thereof.

7. Insulation system according to claim 6, **characterised in that** for each insulation blanket, a flange (52, 54) made of rigid synthetic material taking up the shape of the cut-out is fastened onto the corresponding blanket (6, 8), and **in that** the two flanges (52, 54) have reversible assembly means (62, 64) making it possible to connect the two flanges.

8. Aircraft fuselage section, comprising frames, an outer skin fastened onto the frames with the aid of fastening parts called stabilizers, at least one insulation blanket,
**characterised in that** it comprises at least one assembly according to claim 4, and **in that** the fastening supports (20) each are fastened onto a stabilizer (2).

9. Aircraft, **characterised in that** it comprises at least one insulation blanket according to one of claims 1 to 3.

10. Method for installing an assembly according to one of claims 4 and 5 in an aircraft fuselage section, **characterized in that** it comprises the following successive steps:
fastening fastening supports (20) onto stabilizers of the fuselage section,
positioning a skin blanket against the fuselage and snap-fitting each end of each bar (14) borne by the blanket into a recess (28) provided in a fastening support (20).
